# FASCICULE DE BREVET EUROPEEN

(11) **EP 1 941 192 B1**
(45) Date de publication et mention de la délivrance du brevet: **13.01.2010**
(21) Numéro de dépôt: 06830973.1
(22) Date de dépôt: 19.10.2006
(51) Int. Cl.: F16K 1/36, F16K 27/02

(54) **VANNE A CLAPET**
KLAPPENVENTIL
FLAP VALVE

(30) Priorité: 28.10.2005 FR 0511108
(43) Date de publication de la demande: 09.07.2008
(73) Titulaire: Valeo Systèmes de Contrôle Moteur, 95800 Cergy (FR)
(72) Inventeur: DUTOT, Antoine, F-76960 Notre Dame de Bondeville (FR); ALBERT, Laurent, F-95810 Vallangoujard (FR); RENARD, Nicolas, F-78955 Carrieres sous Poissy (FR)
(74) Mandataire: Rolland, Jean-Christophe
(86) Numéro de dépôt international: PCT/FR2006/002348
(87) Numéro de publication internationale: WO 2007/048903

(56) Documents cités:
- WO-A-02/36999
- US-A- 1 529 926
- US-A1- 2002 033 462

## Description

La présente invention concerne une vanne de régulation de débit utilisable par exemple dans un circuit de recyclage des gaz d'échappement (ou circuit EGR de l'anglais Exhaust Gaz Recirculation) d'un moteur thermique de véhicule automobile (voiture, camion, transport collectif, utilitaire...).

### ARRIERE PLAN DE L'INVENTION

Une telle vanne comprend un premier conduit, assurant l'admission des gaz d'échappement dans la vanne, et un deuxième conduit, assurant la sortie des gaz de la vanne. Le premier conduit est perpendiculaire au deuxième conduit et débouche dans une portion de liaison du deuxième conduit au premier conduit en définissant une intersection formant un siège d'un clapet coulissant dans la portion de liaison du deuxième conduit selon une direction perpendiculaire au siège entre une position de fermeture dans laquelle le clapet est appliqué contre le siège et une position extrême d'ouverture dans laquelle le clapet est écarté du siège. Le clapet est mis en mouvement au moyen d'un actionneur entre sa position de fermeture et sa position d'ouverture pour régler l'écartement (ou levée) du clapet par rapport à son siège et ainsi la section de passage des gaz d'échappement, la position extrême d'ouverture assurant un débit maximal des gaz d'échappement dans la vanne.

Les norme anti-pollution rendent désormais nécessaire de recycler une part plus importante des gaz d'échappement. Il a donc été envisagé d'accroître le débit des gaz d'échappement dans les vannes en augmentant la levée du clapet et / ou les diamètres du clapet et de son siège. Cependant, ces solutions posent des problèmes de tenue mécanique et entraînent une augmentation de l'encombrement de la vanne notamment incompatible avec, d'une part, l'espace disponible qui est de plus en plus restreint sous le capot moteur des véhicules et, d'autre part, l'allégement général des véhicules que souhaitent les constructeurs afin de limiter la consommation en carburant de leurs véhicules.

Or, en position d'ouverture, le clapet est écarté de la paroi du deuxième conduit opposée au siège. Il est ainsi défini un espace où s'engouffrent les gaz engendrant et perturbant l'écoulement des gaz d'échappement dans la section de passage délimitée par le clapet et son siège.
Ces perturbations limitent le débit maximal des gaz d'échappement dans la vanne.

Une vanne selon le préambule de la revendication 1 a été divulguée dans le document US 2002/0033462.

### OBJET DE L'INVENTION

Un but de l'invention est de fournir une vanne permettant un fort débit tout en ayant une structure relativement compacte.

### BREVE DESCRIPTION DE L'INVENTION

A cet effet, on prévoit, une vanne comportant un premier conduit débouchant dans un deuxième conduit rn définissant une intersection formant un siège perpendiculairement au premier conduit pour un clapet coulissant dans le deuxième conduit perpendiculairement au siège entre une position de fermeture et une position d'ouverture, et des moyens d'actionnement du clapet entre ses deux positions.
Pour la position d'ouverture, les moyens d'actionnement sont commandés pour amener le clapet au voisinage immédiat d'une paroi du deuxième conduit s'étendant en regard du siège.

La proximité du clapet en position d'ouverture et de la paroi du conduit limite la circulation de fluide derrière le clapet et donc le risque de perturbations de l'écoulement entre le siège et le clapet.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue schématique de la vanne conforme à l'invention en coupe longitudinale selon la ligne I-I de la figure 2,
- la figure 2 est une vue schématique de la vanne montrant de dessous en coupe selon la ligne II-II de la figure 1, le contour interne du deuxième conduit et le contour du siège,
- la figure 3 est une vue en perspective montrant par transparence les contours internes de la vanne.

### DESCRIPTION DETAILLEE DE L'INVENTION

En référence aux figures, la vanne généralement désignée en 100 comprend un premier conduit 1 destiné à être raccordé à une canalisation d'arrivée de gaz et un deuxième conduit 2 qui s'étend perpendiculairement au conduit 1 et est destiné à être raccordé à une canalisation d'évacuation des gaz.

Le conduit 2 possède une portion de liaison 3 au conduit 1. La portion de liaison 3 comporte deux parois planes 4, 5 en regard l'une de l'autre et reliées par une paroi de fond 6. Le conduit 1 débouche dans la portion de liaison 3 par la paroi plane 4 en définissant une intersection formant un siège 7 d'un clapet 8. Le clapet 8 est solidaire d'une tige d'actionnement 9 reçue à coulissement dans un alésage 10 ménagé dans la paroi plane 5. L'alésage 10 s'étend en regard du siège 7 perpendiculairement à celui-ci et débouche dans la portion de liaison 3. La tige d'actionnement 9 est reliée à un actionneur 12 fixé à l'extérieur du conduit 2.

Le clapet 8 possède en regard du siège 7 une surface de déviation 13 formée d'une surface de révolution de génératrice incurvée ici en arc de cercle. La surface de déviation 13 a ainsi un profil curviligne ayant une base 14 étroite dirigée vers le siège 7 et s'évasant à l'opposé du siège 7 jusqu'à un bord périphérique 15 du clapet 8. Au niveau du bord périphérique 15, la génératrice vient tangenter un plan perpendiculaire à la direction de coulissement pour se confondre avec ce plan. La base 14 est formée par l'extrémité plane de la tige d'actionnement 9 opposée à l'actionneur 12 qui traverse le clapet 8 et est soudée à celui-ci au niveau de la base 14. Le clapet 8 possède à l'opposé du siège 7 une face arrière 16 plane en saillie du centre de laquelle s'étend un bossage 11.

La paroi de fond 6 de la portion de liaison 3 entoure partiellement le clapet 8 parallèlement à la direction de coulissement du clapet 8 et rejoint le reste du conduit 2 dans une zone de raccordement 17. La paroi de fond 6 est écartée du bord périphérique 15 d'une distance dont la détermination est expliquée en relation avec le fonctionnement de la vanne dans la suite de la description.

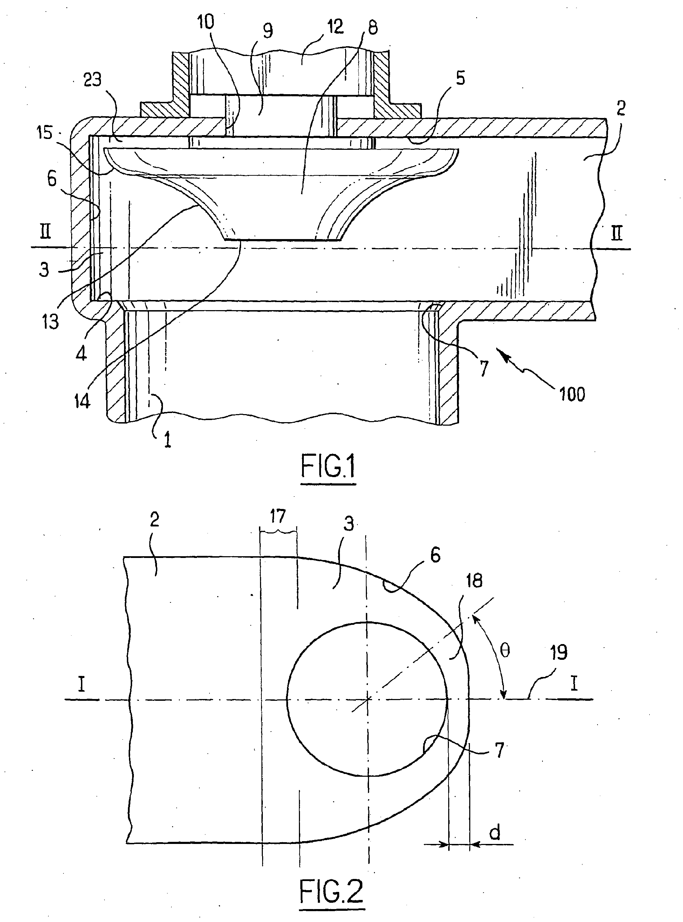

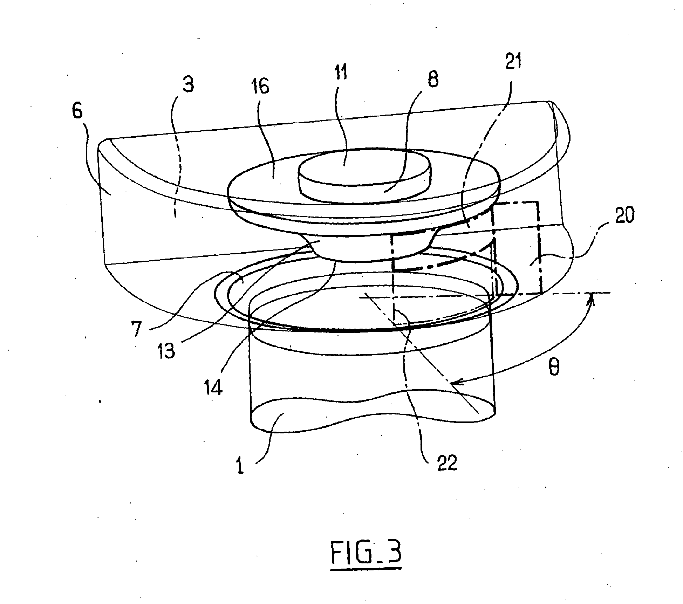

L'actionneur 12 commande ainsi le coulissement du clapet 8 selon une direction perpendiculaire au siège 7 entre une position extrême de fermeture dans laquelle le clapet 8 est appliqué contre le siège 7 et une position d'ouverture (représentée à la figure 1), ou position de levée maximale du clapet 8, dans laquelle le clapet 8 est écarté du siège 7 et le bord périphérique 15 définit avec le siège 7 à l'aplomb de celui-ci une section maximale théorique de passage des gaz (représentée en trait mixte fin sur la figure 3 et référencée 22).

En position extrême d'ouverture, l'actionneur 12 est commandé pour que le clapet 8 s'étende au voisinage immédiat de la paroi 5. Ceci permet d'éviter que des gaz ne viennent circuler en arrière du clapet 8 et provoquer des turbulences perturbant l'écoulement des gaz en amont du clapet. Dans cette position, le clapet est ici plus proche de la paroi 5 que du siège du clapet. L'espace laissé aux gaz pour circuler entre le clapet et son siège est ainsi plus important que l'espace laissé entre le clapet et la paroi 5. On favorise de la sorte le passage des gaz entre le clapet et son siège. Plus précisément, en position extrême d'ouverture, le bossage il du clapet 8 est en appui contre la paroi 5 de telle manière qu'un espace 13 de faible épaisseur soit laissé entre la paroi 5 et le clapet 8. Comme le bossage 11 est en appui contre la paroi 5, le clapet 8 obture l'alésage 10 et empêche que des particules et des saletés véhiculées par les gaz ne viennent s'introduire dans l'alésage 10 et altérer la qualité du coulissement de la tige 9. L'espace 13 laissé entre le clapet 8 et la paroi 5 permet d'éviter un effet ventouse s'opposant au retour du clapet 8 de sa position extrême d'ouverture vers sa position extrême de fermeture. L'appui du clapet 8 sur la paroi 5 par une surface réduite permet de limiter les sollicitations que pourraient engendrer, sur la liaison de la tige 9 au clapet 8, un appui sur une grande surface si la tige 9 et le clapet 8 n'étaient pas exactement perpendiculaires ou si la paroi 5 ou la face arrière 16 présentaient des défauts de planéité.

La surface de déviation 13 a pour fonction de renvoyer perpendiculairement au conduit 1 un flux gazeux provenant de celui-ci. Le guidage du flux gazeux par la surface de déviation permet de limiter l'apparition de turbulences dans le flux gazeux lors du passage de celui-ci du premier conduit au deuxième conduit et améliore le débit dans la vanne. La forme de la surface de déviation 13 en surface de révolution de génératrice incurvée facilite la réalisation du clapet. La forme de la génératrice en arc de cercle allie simplicité de réalisation et efficacité.

La paroi de fond 6 de la portion de liaison 3 est écartée du bord périphérique 15 d'une distance telle que, pour la position extrême d'ouverture, la paroi de fond 6 définit avec le bord périphérique 15 du clapet 8 et le siège.7 un passage 18 de section croissant depuis un axe médian 19 de la paroi de fond 6 vers la zone de raccordement 17. Plus précisément, la paroi de fond 6 est agencée de telle manière que, pour tout secteur angulaire θ défini entre l'axe médian 19 et un point quelconque de la paroi de fond 6, la section de passage 20 définie localement entre la paroi de fond 6, le bord périphérique 15 et le siège 7 au voisinage de ce point est au moins égale à une section efficace de passage 21 définie localement à l'aplomb du siège 7 entre le bord périphérique 15 et le siège 7 dans le secteur angulaire considéré. La section efficace de passage 21 est égale à environ la moitié de la section maximale théorique de passage 22 définie localement dans le secteur angulaire considéré.

La section de passage 20 est au moins égale à la section efficace de passage 21 affectée d'un coefficient k supérieur à 1 et dépendant du secteur angulaire θ considéré.

En l'espèce, le coefficient k est égal à Π divisé par l'angle θ en radian (Π/θ). Ainsi, pour θ = Π/4, la section 20 est égale à quatre fois la section 21. Pour les valeurs d'angle θ proches de zéro, la paroi de fond 6 est rectiligne et écartée du clapet 8 d'une distance d au niveau de l'axe médian 19 de telle manière que la section 20 soit supérieure à la section 21 même pour les faibles valeurs de θ. Le coefficient dépendant de θ permet de tenir compte du débit local des gaz d'échappement qui augmente à mesure que θ augmente.

Bien entendu, l'invention n'est pas limitée au mode de réalisation décrit mais englobe les variantes de réalisation entrant dans le cadre de l'invention défini par les revendications.

Les moyens de butée du clapet en position d'ouverture peuvent être formés d'un bossage s'étendant en saillie de la paroi plane 5.

D'une manière générale, la section 20 peut être égale à k fois la section 21 avec 1 ≤ k ≤ Π/θ avec θ variant entre 0 et 2 Π/3 environ de part et d'autre de l'axe médian 19.

La combinaison de la forme du deuxième conduit, la surface de déviation du clapet et son positionnement en position d'ouverture constituent une solution optimale pour maximiser le débit dans la vanne. Chacune de ces caractéristiques peut cependant être utilisée de façon indépendante des autres pour réaliser l'invention ; une combinaison de deux de ces caractéristiques seulement est également utilisable.

## Revendications

1. Vanne (100) comportant un premier conduit (1) débouchant dans un deuxième conduit (2) en définissant une intersection formant un siège (7) perpendiculairement au premier conduit pour un clapet (8) coulissant dans le deuxième conduit perpendiculairement au siège entre une position de fermeture et une position d'ouverture, et des moyens d'actionnement (12) du clapet entre ses deux.positions, **caractérisée en ce que** pour la position d'ouverture, les moyens d'actionnement sont commandés pour amener le clapet au voisinage immédiat d'une paroi (5) du deuxième conduit s'étendant en regard du siège.

2. Vanne selon la revendication 1, dans laquelle un espace (23) de faible épaisseur est laissé entre cette paroi (5) et le clapet (8) en position d'ouverture.

3. Vanne selon la revendication 2, comportant des moyens de butée (11) du clapet en position d'ouverture pour maintenir l'espace (23) entre la paroi plane (5) en regard du siège et le clapet (8).

4. Vanne selon la revendication 3, dans laquelle le clapet (8) est solidaire d'une tige (9) d'actionnement reçue dans un alésage (10) ménagé dans la paroi plane (5) du deuxième conduit (2) en regard du siège (7), et le clapet en position d'ouverture obture l'alésage.

5. Vanne selon la revendication 1, dans laquelle cette paroi (5) est plane.

6. Vanne selon la revendication 5, dans laquelle le premier conduit débouche dans une portion de liaison (3) du deuxième conduit, le clapet (8) coulissant dans la portion de liaison selon une direction perpendiculaire au siège, et dans laquelle la portion de liaison comporte en plus de la paroi plane (5) en regard du siège une paroi plane (4) dans laquelle le siège (7) est formé, les parois planes (4, 5) étant reliées par une paroi de fond (6) entourant partiellement le clapet parallèlement à la direction de coulissement à une distance d'un bord (15) du clapet telle que, pour la position d'ouverture, la paroi de fond définissant avec le bord du clapet et le siège un passage (18) de section croissant depuis un axe médian (19) de la paroi de fond vers des zones de raccordement (17) de la paroi de fond au deuxième conduit.

7. Vanne selon la revendication 6, dans laquelle la paroi de fond (6) est agencée de telle manière que, pour tout secteur angulaire (θ) défini entre l'axe médian (19) de la paroi de fond et un point quelconque de la paroi de fond, la section de passage (18) définie localement entre la paroi de fond, le bord (15) du clapet (8) et le siège (7) au voisinage de ce point est au moins égale au produit d'un coefficient (k) et d'une section efficace de passage (21) définie localement à l'aplomb du siège entre le bord du clapet et le siège dans le secteur angulaire considéré.

8. Vanne selon la revendication 7, dans laquelle la section efficace de passage (21) définie localement à l'aplomb du siège (7) entre le bord (15) du clapet (8) et le siège (7) est égale à environ la moitié de la section maximale théorique de passage (22) définie localement dans le secteur angulaire considéré (θ) à l'aplomb du siège entre le bord du clapet et le siège.

9. Vanne selon la revendication 7, dans laquelle le coefficient (k) dépend de l'angle (θ) du secteur angulaire considéré.

10. Vanne selon la revendication 7, dans laquelle le coefficient (k) est compris entre 1 et Π divisé par l'angle en radian du secteur angulaire considéré (Π).

11. Vanne selon la revendication 1, dans laquelle le clapet (8) possède en regard du siège (7) une surface de déviation (13) de profil curviligne ayant une base étroite (14) dirigée vers le siège et s'évasant à l'opposé du siège pour renvoyer perpendiculairement au premier conduit (1) un flux gazeux provenant de celui-ci.

12. Vanne selon la revendication 11, dans laquelle la surface de déviation (13) est une surface de révolution de génératrice incurvée.

13. Vanne selon la revendication 12, dans laquelle la génératrice a une forme en arc de cercle.

## Claims

1. Valve (100) comprising a first duct (1) opening into a second duct (2) thereby defining an intersection that forms a seat (7) at right angles to the first duct for a valve disk (8) that slides in the second duct at right angles to the seat between a closed position and an open position, and means (12) of operating the valve disk between its two positions, **characterized in that**, for the open position, the operating means are controlled in such a way as to bring the valve disk into close proximity to a wall (5) of the second duct lying facing the seat.

2. Valve according to Claim 1, in which a narrow space (23) is left between this wall (5) and the valve disk (8) in the open position.

3. Valve according to Claim 2, comprising stop means (11) for arresting the valve disk in the open position in order to maintain the space (23) between the flat wall (5) facing the seat and the valve disk (8).

4. Valve according to Claim 3, in which the valve disk (8) is secured to an actuating stem (9) housed in a bore (10) formed in the flat wall (5) of the second duct (2) facing the seat (7), and the valve disk, in the open position, closes off the bore.

5. Valve according to Claim 1, in which this wall (5) is flat.

6. Valve according to Claim 5, in which the first duct opens into a connecting portion (3) of the second duct, the valve disk (8) sliding in the connecting portion in a direction at right angles to the seat, and in which the connecting portion comprises, in addition to the flat wall (5) facing the seat, a flat wall (4) in which the seat (7) is formed, the flat walls (4, 5) being connected by an end wall (6) which partially surrounds the valve disk parallel to the direction of sliding at a distance from an edge (15) of the valve disk that is such that, for the open position, the end wall defines with the edge of the valve disk and the seat a passage (18), the cross section of which increases from a median axis (19) of the end wall toward regions (17) where the end wall meets the second duct.

7. Valve according to Claim 6, in which the end wall (6) is designed in such a way that, for any angular sector (θ) defined between the median axis (19) of the end wall and any arbitrary point on the end wall, the passage cross section (18) locally defined between the end wall, the edge (15) of the valve disk (8) and the seat (7) in the vicinity of this point is at least equal to the product of a coefficient (k) and an effective passage cross section (21) locally defined in line with the seat between the edge of the valve disk and the seat in the angular sector concerned.

8. Valve according to Claim 7, in which the effective passage cross section (21) locally defined in line with the seat (7) between the edge (15) of the valve disk (8) and the seat (7) is equal to approximately half the theoretical maximum passage cross section (22) locally defined in the angular sector (θ) concerned in line with the seat between the edge of the valve disk and the seat.

9. Valve according to Claim 7, in which the coefficient (k) is dependent on the angle (θ) of the angular sector concerned.

10. Valve according to Claim 7, in which the coefficient (k) ranges between 1 and π divided by the angle, in radians, of the angular sector (θ) concerned.

11. Valve according to Claim 1, in which the valve disk (8) has, facing the seat (7), a deviation surface (13) of curvilinear profile having a narrow base (14) facing toward the seat and widening away from the seat in order to deflect at right angles to the first duct (1) a gaseous stream originating therefrom.

12. Valve according to Claim 11, in which the deviation surface (13) is a surface of revolution with a curved generatrix.

13. Valve according to Claim 12, in which the generatrix has the shape of an arc of a circle.

## Patentansprüche

1. Ventil (100), das einen ersten Kanal (1), der in einen zweiten Kanal (2) mündet, indem er eine Übergang definiert, der einen Sitz (7) lotrecht zum ersten Kanal für eine Ventilklappe (8) bildet, die im zweiten Kanal lotrecht zum Sitz zwischen einer Schließstellung und einer Öffnungsstellung gleitet, und Betätigungseinrichtungen (12) der Ventilklappe zwischen ihren beiden Stellungen aufweist, **dadurch gekennzeichnet, dass** für die Öffnungsstellung die Betätigungseinrichtungen gesteuert werden, um die Ventilklappe in direkte Nähe einer Wand (5) des zweiten Kanals zu bringen, die sich gegenüber dem Sitz erstreckt.

2. Ventil nach Anspruch 1, bei dem in der Öffnungsstellung ein Raum (23) geringer Dicke zwischen dieser Wand (5) und der Ventilklappe (8) gelassen wird.

3. Ventil nach Anspruch 2, das Anschlageinrichtungen (11) der Ventilklappe in der Öffnungsstellung aufweist, um den Raum (23) zwischen der ebenen Wand (5) gegenüber dem Sitz und der Ventilklappe (8) aufrechtzuerhalten.

4. Ventil nach Anspruch 3, bei dem die Ventilklappe (8) fest mit einer Betätigungsstange (9) verbunden ist, die in einer Bohrung (10) aufgenommen wird, welche in der ebenen Wand (5) des zweiten Kanals (2) gegenüber dem Sitz (7) ausgespart ist, und die Ventilklappe in der Öffnungsstellung die Bohrung verdeckt.

5. Ventil nach Anspruch 1, bei dem diese Wand (5) eben ist.

6. Ventil nach Anspruch 5, bei dem der erste Kanal in einem Verbindungsabschnitt (3) des zweiten Kanals mündet, wobei die Ventilklappe (8) in dem Verbindungsabschnitt in einer Richtung lotrecht zum Sitz gleitet, und bei dem der Verbindungsabschnitt zusätzlich zur ebenen Wand (5) gegenüber dem Sitz eine ebene Wand (4) aufweist, in der der Sitz (7) geformt ist, wobei die ebenen Wände (4, 5) durch eine Rückwand (6) verbunden werden, die teilweise die Ventilklappe parallel zur Gleitrichtung in einem derartigen Abstand zu einem Rand (15) der Ventilklappe umgibt, dass in der Öffnungsstellung die Rückwand mit dem Rand der Ventilklappe und dem Sitz einen Durchgangsquerschnitt (18) bildet, der ausgehend von einer Mittelachse (19) der Rückwand zu Anschlusszonen (17) der Rückwand an den zweiten Kanal zunimmt.

7. Ventil nach Anspruch 6, bei dem die Rückwand (6) so angeordnet ist, dass für jeden zwischen der Mittelachse (19) der Rückwand und einem beliebigen Punkt der Rückwand definierten Winkelsektor (θ) der lokal zwischen der Rückwand, dem Rand (15) der Ventilklappe (8) und dem Sitz (7) in der Nähe dieses Punkts gebildete Durchgangsquerschnitt (18) mindestens gleich dem Produkt aus einem Koeffizient (k) und einem wirksamen Durchgangsquerschnitt (21) ist, der lokal senkrecht zum Sitz zwischen dem Rand der Ventilklappe und dem Sitz im betrachteten Winkelsektor definiert wird.

8. Ventil nach Anspruch 7, bei dem der wirksame Durchgangsquerschnitt (21), der lokal senkrecht zum Sitz (7) zwischen dem Rand (15) der Ventilklappe (8) und dem Sitz (7) definiert ist, gleich etwa der Hälfte des maximalen theoretischen Durchgangsquerschnitts (22) ist, der lokal im betrachteten Winkelsektor (θ) senkrecht zum Sitz zwischen dem Rand der Ventilklappe und dem Sitz definiert ist.

9. Ventil nach Anspruch 7, bei dem Koeffizient (k) vom Winkel (θ) des betrachteten Winkelsektors abhängt.

10. Ventil nach Anspruch 7, bei dem der Koeffizient (k) zwischen 1 und θ geteilt durch den Radian-Winkel des betrachteten Winkelsektors (θ) liegt.

11. Ventil nach Anspruch 1, bei dem die Ventilklappe (8) gegenüber dem Sitz (7) eine Umlenkfläche (13) mit gekrümmtem Profil besitzt, die eine zum Sitz gerichtete schmale Basis (14) hat und sich entgegengesetzt zum Sitz ausweitet, um lotrecht zum ersten Kanal (1) einen von diesem kommenden Gasstrom zurückzuleiten.

12. Ventil nach Anspruch 11, bei dem die Umlenkfläche (13) eine drehsymmetrische Fläche mit gekrümmter Mantellinie ist.

13. Ventil nach Anspruch 12, bei dem die Mantellinie eine Kreisbogenform hat.
